(19) Europäisches Patentamt
European Patent Office
Office européen des brevets

(11) Veröffentlichungsnummer: **0 202 491**
**A2**

(12) # EUROPÄISCHE PATENTANMELDUNG

(21) Anmeldenummer: **86105559.8**

(22) Anmeldetag: **22.04.86**

(51) Int. Cl.⁴: **C 08 L 67/00**
C 08 L 101/10, C 09 J 3/16

(30) Priorität: **22.05.85 DE 3518357**

(43) Veröffentlichungstag der Anmeldung:
**26.11.86 Patentblatt 86/48**

(84) Benannte Vertragsstaaten:
**DE FR GB NL**

(71) Anmelder: **DYNAMIT NOBEL AKTIENGESELLSCHAFT**
**Postfach 1261**
**D-5210 Troisdorf, Bez. Köln(DE)**

(72) Erfinder: **Huber, Hans, Dr.**
**Im Korresgarten 68**
**D-5204 Lohmar(DE)**

(72) Erfinder: **Müller, Hartmut, Dr.**
**Siebengebirgsallee 19**
**D-5210 Troisdorf(DE)**

(54) **Feuchtigkeitshärtendes Polyestergemisch.**

(57) Vorliegende Erfindung behandelt neue Polyestergemische, die sich als Schmelzkleber eignen. Die neuen Gemische enthalten als feste Polyesteranteile solche mit einer Glasumwandlungstemperatur über 10 °C und einer Hydroxylzahl zwischen 20 und 60 sowie flüssige Polyester mit einer Glasumwandlungstemperatur unter − 10 °C und einer Hydroxylzahl zwischen 10 und 80. Dieses Polyestergemisch ist erfindungsgemäß modifiziert durch Urethansilylharnstoffgruppen. Dieses modifizierte Polyestergemisch besitzt Erweichungspunkte von mindestens 50 °C. Es härtet durch Luftfeuchtigkeit aus. Im ausgehärteten Zustand kann es ohne Zersetzung auf Temperaturen über 200 °C erhitzt werden. Eine weitere Modifizierung mit hochmolekularen Polyestern mit Glasumwandlungstemperaturen unter 0 °C, die ggf. auch mit Urethansilylharnstoffgruppen funktionalisiert sind, ist ebenfalls möglich.

EP 0 202 491 A2

Troisdorf, den 21.05.1985
OZ 85032 Dr.Sk/br.

DYNAMIT NOBEL AKTIENGESELLSCHAFT
5210 Troisdorf

Feuchtigkeitshärtendes Polyestergemisch

Gegenstand der vorliegenden Erfindung sind Schmelzklebstoffe auf der Basis einer Mischung von sehr unterschiedlichen Polyestern, die mit Alkoxysilylverbindungen funktionalisiert sind und mit Feuchtigkeit zu elastischen, temperaturstabilen Verklebungen vernetzen.

Schmelzklebstoffe auf der Basis von Ethylen-Vinylacetat-Copolymeren, Polyethylen, Polypropylen, Synthesekautschuk, Polyamiden, Polyestern u.ä. sind seit langem bekannt. Diese werden bei Temperaturen oberhalb ihres Schmelzpunktes auf ein Substrat aufgebracht und erzielen beim Abkühlen unter ihren Schmelzpunkt sofort eine gute Festigkeit. Der Nachteil dieser Schmelzklebstoffe liegt jedoch in der zum Auftrag nötigen hohen Temperatur von über 100 °C sowie in ihrer schlechten Wärmebeständigkeit. Dies führt dazu, daß diese Schmelzkleber aus dem damit erhaltenen Verbund bei höherer Temperatur wieder erweichen und damit den Verbund auflösen.

Bekannt sind weiterhin flüssige oder pastöse alkoxysilylgruppen-haltige Polymere. So werden in der US-PS 3 632 557 flüssige Polyurethane beschrieben, die bei Raumtemperatur mit Feuchtigkeit aushärten.

Bei ihrer Herstellung wird von Flüssigpolymeren ausgegangen, die durch Reaktion mit überschüssigem Diisocyanat zu einem Polymeren mit endständigen Isocyanatgruppen übergeführt werden. Diese wieder läßt man mit einem Aminosilan, vorzugsweise $\gamma$-Aminopropyltrimethoxysilan reagieren, so daß schließlich ein Flüssigpolymeres resultiert, das stöchiometrisch, d.h. quantitativ, mit Alkoxysilyl-Endgruppen versehen ist. Solche Flüssigpolymere härten mit Luftfeuchtigkeit zwar zu gummiartigen Produkten aus, besitzen jedoch eine geringe Reißdehnung und vor allem eine extrem schlechte Weiterreißfestigkeit. Die gleichen Nachteile haben die in den US-PS 3 979 344 und 4 222 925 beschriebenen Produkte. Durch die in der US-PS 3 971 751 beschriebene Verfahrensweise, bei der Polyether über eine Allylierung und anschließende Hydrosilylierung mit Alkoxysilanen funktionalisiert sind, wird dieser Nachteil zwar weitgehend behoben; das beschriebene Verfahren ist jedoch so aufwendig, daß die dort beschriebenen Ergebnisse auf andere Weise besser und vor allem weniger aufwendig erzielt werden können.

Alle in diesen Schutzrechten genannten Massen sind jedoch aufgrund ihrer geringen Anfangsfestigkeit sofort nach der Verklebung als Schmelzklebstoffe nicht geeignet.

Mit Feuchtigkeit härtbare Schmelzklebstoffe auf der Basis von Polyurethan-Präpolymeren sind ebenfalls bekannt. Sie werden durch Kombination von Polyurethan-Präpolymeren mit Thermoplasten wie Ketonharzen oder Vinyl- oder Acryl-Copolymeren und Kolophoniumharzen als reaktive, isocyanathaltige Schmelzklebstoffe erhalten (vgl. DE-OS 32 36 313 und DE-PS 24 01 320).

Die Technologie aller dieser Polyurethan-Präpolymeren hat den Nachteil, daß diese Produkte freies Isocyanat enthalten und dadurch bei den für den Auftrag notwendigen Temperaturen gesundheitsschädliche Dämpfe entwickeln.

Schließlich wird in J 5 9024-767-A ein mit Feuchtigkeit nachhärtender Schmelzklebstoff aus einem Copolymerisat von ethylenisch ungesättigten Verbindungen mit Vinyltrialkoxy- bzw. Vinyltriacetoxysilanen beschrieben, deren Technologie jedoch bei der Herstellung sehr hohe Temperaturen und Drücke oberhalb 500 bar erfordert.

Es bestand deshalb die Aufgabe, einen Schmelzklebstoff zu entwickeln, der sich bei Temperaturen unter 150 °C auftragen läßt, nach Abkühlung auf Raumtemperatur eine gute Anfangsfestigkeit besitzt und mit aus der Umgebung aufgenommener Feuchtigkeit zu sehr elastischen und unschmelzbaren Produkten vernetzt.

Verwendet man zur Herstellung dieser Klebstoffe nun ausschließlich solche Hydroxylpolyester, die bei Raumtemperatur fest sind (Tg $\geq$10 °C), erhält man zwar reaktive Produkte, die jedoch als Schmelzklebstoffe nicht geeignet sind. Teilkristalline Polyester für sich allein führen auf einer großen Zahl von Substraten zu unzureichender Haftung, während amorphe Hydroxylpolyester glasartige und sehr spröde Produkte

ergeben. Ebenso sind flüssige Polyester für sich allein keine Schmelzklebstoffe. Eine Funktionalisierung hochmolekularer Polyester ist ebenfalls nicht möglich, da diese hohe Erweichungspunkte und sehr geringe Restaktivität besitzen.

Es wurden nun Polyestergemische der im Anspruch 1 aufgeführten Zusammensetzung gefunden, die die vorgenannten Nachteile nicht besitzen.

Es wurde nämlich nun überraschenderweise gefunden, daß gerade die Kombination von Festpolyestern mit Glasumwandlungstemperaturen über Raumtemperatur mit flüssigen Hydroxylpolyestern von tiefer Glasumwandlungstemperatur nach ihrer Funktionalisierung mit bestimmten Alkoxysilylverbindungen zu sehr elastischen Schmelzklebstoffen führte, die auch nach der Aushärtung mit Luftfeuchtigkeit ihre Elastizität nicht verlieren.

Die erfindungsgemäßen Polyestergemische besitzen vorzugsweise Erweichungspunkte von mindestens 50 °C und Glasumwandlungstemperaturen unter Raumtemperatur, vorzugsweise unter 0 °C. Sie eignen sich besonders gut als Schmelzklebstoffe; sie sind elastisch und besitzen eine gute Temperaturbeständigkeit, vor allem eine ausgezeichnete Kältebeständigkeit. Gegenüber den bekannten isocyanathaltigen Schmelzklebern haben sie den Vorteil, daß sie physiologisch unbedenklich sind, da sie keine freien Isocyanatgruppen enthalten und keine gesundheitsschädlichen Spaltprodukte bei ihrem Auftrag auf ein Substrat bei höheren Temperaturen freigesetzt werden.

Die erfindungsgemäßen Polyestergemische vernetzen mit Feuchtigkeit bereits bei Raumtemperatur. Für diese Vernetzungsreaktion genügt bereits die Luftfeuchtigkeit.

Es ist deshalb notwendig, die erfindungsgemäßen Gemische unter Feuchtigkeitsausschluß herzustellen und zu lagern. Unter diesen Bedingungen ist eine sehr lange Lagerstabilität gewährleistet.

Die neuen Schmelzklebstoffe auf Basis der erfindungsgemäßen Polyestergemische besitzen bereits eine hohe Anfangsfestigkeit und können nach erfolgter Vernetzung mit Luftfeuchtigkeit auf Temperaturen von 200 °C oder mehr erhitzt werden, ohne daß sie aufschmelzen oder sich zersetzen. Dies hat den Vorteil, daß ein mit diesen Schmelzklebern erhaltener Verbund auch auf diese hohen Temperaturen erhitzt werden kann.

Das erfindungsgemäße Polyestergemisch hat als Ausgangsprodukte an sich bekannte hydroxylgruppen-haltige Festpolyester (Komponente A) und bei Raumtemperatur flüssige Hydroxylpolyester (Komponente B). Als Festpolyester (Komponente A) werden hierbei solche herangezogen, deren Erweichungspunkt über 60 °C, vorzugsweise über 80 °C liegt. Die Glasumwandlungstemperatur sollte gleichzeitig über 10 °C, vorzugsweise über Raumtemperatur liegen. Die Hydroxylzahl dieser Polyester kann etwa 20 bis 60 mg KOH/g betragen. Im allgemeinen liegt das mittlere Molekulargewicht dieser Polyester zwischen 1 500 und 8 000, vorzugsweise zwischen 2 000 und 6 000.

Die bei Raumtemperatur flüssigen Hydroxylpolyester (Komponente B) sollten eine Glasumwandlungstemperatur unter - 10 °C, vorzugsweise unter - 30 °C aufweisen, so daß eine ausreichende Elastifizierung der Polyestermischung gewährleistet wird. Die Hydroxylzahl dieser Flüssigpolyester kann sich zwischen 10 und 80 mg KOH/g, vorzugsweise jedoch zwischen 20 und 50 mg KOH/g bewegen.

Im allgemeinen liegt das mittlere Molekulargewicht dieser Polyester zwischen 1 000 und 10 000, vorzugsweise zwischen 2 000 und 6 000.

Der Anteil der Komponenten A und B in dem Polyestergemisch vor deren Funktionalisierung mit den silylgruppenhaltigen Verbindungen richtet sich nach der gewünschten Viskosität, dem Erweichungspunkt, der Elastizität sowie nach der Anfangs- und Endfestigkeit des gewünschten Verbundes. So führen hohe Anteile an Festpolyestern zu entsprechend harten Produkten mit guter Anfangsfestigkeit, während ein steigender Anteil an Flüssigpolyestern zu weicheren und elastischeren Produkten führt. Demzufolge sind Kombinationen von 10 bis 90 % Festpolyestern mit entsprechend 90 bis 10 % Anteil der flüssigen Komponenten möglich, selbstverständlich in Abhängigkeit von deren Viskositäten bzw. Erweichungspunkten und insbesondere deren Glasumwandlungstemperaturen.

Als Rohstoffe für diese Polyester, die nach bekannten Verfahren polykondensiert werden, dienen Di- bzw. Polycarbonsäuren wie aliphatische gesättigte oder ungesättigte Dicarbonsäuren, aromatische Di- oder Polycarbonsäuren sowie aliphatische Di- oder Polyole bekannter Art.

Die Funktionalisierung der genannten Polyestermischungen mit der Urethansilylharnstoffgruppe kann auf zweierlei Wege erfolgen: Entweder wird zuerst das Polyestergemisch mit soviel Isocyanat umgesetzt, daß im Mittel über 95 % der OH-Gruppen der Komponenten A und B mit einer NCO-Gruppe des Isocyanats reagieren, so daß eine NCO-Gruppe des Isocyanats für die Reaktion mit dem organofunktionellen Silan erhalten bleibt. Das Molverhältnis der

Hydroxylgruppen der Komponenten A und B zu den NCO-Gruppen sollte deshalb bei dieser Herstellungsart bei etwa 1 : 2 liegen. Das erhaltene NCO-terminierte Polyestergemisch, dessen OH-Zahl maximal 5 beträgt, bevorzugt jedoch keine OH-Gruppen mehr aufweist, wird anschließend mit einer den NCO-Gruppen des Polyestergemisches entsprechenden Menge eines Amino- oder Mercaptosilans umgesetzt. Pro Mol NCO-Gruppe wird etwa 1 Mol Organosilan eingesetzt.

Bei der zweiten Herstellungsmöglichkeit der neuen Polyestergemische wird zuerst ein Additionsprodukt aus dem Amino- oder Mercaptosilan mit einem Diisocyanat hergestellt und dieses Produkt anschließend mit dem Polyestergemisch umgesetzt. Diese Durchführungsform wird bevorzugt angewendet. Dabei werden die Organosilane mit den Diisocyanaten im Molverhältnis 1 : 1 umgesetzt, so daß im Umsetzungsprodukt eine freie NCO-Gruppe für die Reaktion mit den OH-Gruppen des Polyesters erhalten bleibt. Dieses Additionsprodukt wird mit einer solchen Menge an dem Polyestergemisch A + B umgesetzt, daß deren OH-Gruppen mindestens zu 95 % mit den NCO-Gruppen unter Bildung der im Anspruch 1 genannten Urethansilylharnstoffgruppen reagieren.

Bei beiden Herstellungsarten sind als Aminosilane solche der Formel

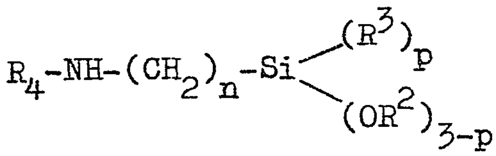

$R_4$=H oder Alkyl, Aryl oder der Rest

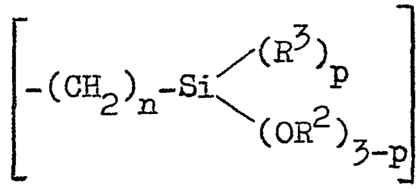

$R^3$=Alkyl mit 1 bis 4 C-Atomen

$R_2$=Alkyl oder Alkoxyalkylen mit bis zu 4 C-Atomen

p=0 oder 1 oder 2

n=1 bis 4

geeignet, wobei besonders solche mit nur einer - vorzugsweise sekundären - Aminogruppe in Frage kommen. Als Beispiele seien genannt:

γ-Aminopropyltrimethoxysilan
γ-Aminopropyltriethoxysilan
N-Methyl-γ-Aminopropyltrimethoxysilan
N-Cyclohexyl-γ-Aminopropyltrimethoxysilan
N-n-Octyl-γ-Aminopropyltrimethoxysilan
N-Phenyl-γ-Aminopropyltrimethoxysilan
Di-[1-Propyl-3(trimethoxysilyl)]-amin
N-Metyhl-γ-Aminopropylmethyl-dimethoxysilan.

Auch Mercaptosilanester der Formel

$$HS-(CH_2)_n-(CH_2)_n-Si \begin{matrix} (R^3)_p \\ (OR^2)_{3-p} \end{matrix},$$

in der $R_2$, $R_3$, n und p die obengenannte Bedeutung haben, wie z.B.
γ-Mercaptopropyltrimethoxysilan
γ-Mercaptopropyltriethoxysilan,
sind für die Ausführung der Erfindung brauchbar.
Außer Methoxy- und Ethoxysilanen sind auch andere Alkoxysubstituenten, insbesondere die Monomethylether von Glykolen wie Ethylen- oder Diethylenglykol etc. einsetzbar.

Als Diisocyanate eignen sich prinzipiell alle bekannten und marktgängigen monomeren und polymeren Diisocyanate; auch Triisocyanate sind einsetzbar. Bei ihrer Verwendung muß lediglich darauf geachtet werden, daß bei ihrer Reaktion mit dem hydroxylhaltigen Polyestergemisch keine ungewünschte Molekulargewichtserhöhung eintritt.

Zur Verbesserung der Anfangsfestigkeit wie auch der spezifischen Substrathaftung können die erfindungsgemäßen Gemische noch zusätzlich hochmolekulare Polyester mit einem Erweichungspunkt über 60 °C und gleichzeitig einer Glasumwandlungstemperatur unter 0 °C zugesetzt enthalten. Dessen Hydroxylzahl sollte unter 20 mg KOH/g, vorzugsweise unter 5 mg KOH/g liegen. Bei diesem Polyester kann es sich entweder um einen amorphen oder auch schwach kristallinen Typ handeln.

Der Zusatz kann sowohl zu dem silanterminierten Polyestergemisch erfolgen als auch bereits zu dem Gemisch der Komponenten A und B vor deren Reaktion mit den Isocyanaten bzw. Silanen, so daß dieser hochmolekulare Polyester ebenfalls die im Anspruch 1 genannten Urethansilylharnstoffgruppierungen enthält.

Der Zusatz dieser hochmolekularen Polyester erhöht die Flexibilität und die Anfangsfestigkeit der erfindungsgemäßen Schmelzkleber. Es sind Zusatzmengen bis zu 40 Gew.-%, bezogen auf das Gesamtgewicht, möglich.

Die erfindungsgemäßen Polyestergemische können bei ihrem Einsatz als Schmelzklebstoffe zusätzlich noch solche Stoffe enthalten, die in den bekannten Schmelzklebern ebenfalls üblich sind. Als Beispiele seien an sich bekannte klebrigmachende Harze, Pigmente, Alterungsschutzmittel oder Füllstoffe genannt.

Die Verarbeitung der erfindungsgemäßen Polyestergemische bei ihrem Einsatz als Schmelzklebstoffe erfolgt auf an sich bekannte Weise. Ihr Auftrag auf das Substrat kann mit den üblichen Walzenauftragsgeräten vorgenommen werden. Wegen ihres niedrigen Erweichungspunktes ist aber auch eine Verarbeitung mittels einer heizbaren Sprühpistole möglich.

Die zu verklebenden Substrate können entweder gleicher oder unterschiedlicher Zusammensetzung sein. Als zu verklebende Materialien eignen sich beispielsweise Kunststoffe, Metalle, Holz, Leder oder Glas.

## Beispiele

Verwendete Polyester

Es wurden für die Beispiele 4 bis 19 folgende Polyester herangezogen:

| Polyester | Tg [°C] | Fp [°C] | OHZ [mgKOH/g] |
|---|---|---|---|
| Festpolyester A | + 1o | + 58 | 55 |
| B | + 32 | + 8o | 35 |
| C | + 4o | + 9o | 2o |
| Flüssigpolyester D | - 32 | - | 3o |
| E | - 46 | - | 25 |
| F | - 54 | - | 2o |
| Hochmolekulare Polyester G | - 1o | + 1oo | < 5 |
| H | - 12 | + 85 | < 5 |

G = teilkristallin

H = amorph

Angewandte Meßmethoden

1. Glasumwandlungstemperatur:

Die Messung erfolgte nach der DSC-Methode mit flüssigem Stickstoff als Kühlmittel. Als Gerät wurde ein Perkin-Elmer DSC 4 verwendet. Es wurde die Stufenmitte als Meßpunkt genommen.

2. Fließpunkt:

Die Werte wurden nach DIN 1995 (Ring + Ball nach ASTM D36) mit Glycerin als Medium ermittelt. Die Aufheizgeschwindigkeit betrug 10 °C/min.

3. Hydroxylzahl:

Die Messungen wurden nach DIN 53 240 durchgeführt.

4. Isocyanat-Bestimmung:

Die Werte wurden nach DIN 53 185 ermittelt.

5. Festigkeiten von Verklebungen:

Die Messungen wurden in Anlehnung an PSTC 7 mit einer Abzugsgeschwindigkeit von 300 mm/min ermittelt. Die Kraft pro Fläche, bei welcher der Bruch der Verklebung erfolgte, wurde als Wert genommen.

Beispiel 1 - Addukt 1

In einen Dreihalsrundkolben werden 250 g Methylendiphenyl-4,4'-diisocyanat bei 40 °C vorgelegt. Unter Feuchtigkeitsausschluß und ständigem Rühren werden 193 g N-Methyl-$\gamma$-aminopropyltrimethoxysilan über einen Zeitraum von 60 Minuten zugetropft. Nach weiteren 15 Minuten Rühren erhält man ein Produkt mit einem NCO-Wert von 9,4 $\pm$ 0,3 %.

Beispiel 2 - Addukt 2

In einen Dreihalsrundkolben werden 250 g Methylen-diphenyl-4,4'-diisocyanat bei 40 °C vorgelegt. Unter Feuchtigkeitsausschluß und ständigem Rühren werden 341 g Bis-(aminopropyltrimethoxysilan) über einen Zeitraum von 60 Minuten zugetropft. Nach weiteren 15 Minuten Rühren erhält man ein Produkt mit einem NCO-Wert von 7,0 ± 0,3 %.

Beispiel 3 - Addukt 3

In einen Dreihalsrundkolben werden 250 g Methylen-diphenyl-4,4'-diisocyanat bei 40 °C vorgelegt. Unter Feuchtigkeitsausschluß und ständigem Rühren werden 196 g γ-Mercaptopropyltrimethoxysilan über einen Zeitraum von 60 Minuten zugetropft. Nach weiteren 15 Minuten Rühren erhält man ein Produkt mit einem NCO-Wert von 9,4 ± 0,3 %.

Beispiel 4 - Schmelzklebstoff 1

In einen 2 l-Dreihalskolben wird eine Schmelze, bestehend aus 519 g Polyester A und 222 g Polyester F bei 100 °C vorgelegt. Dieser Schmelze werden 0,5 g Dibutylzinnlaurat sowie anschließend 259 g des Adduktes 1 zugesetzt. Unter Stickstoff wird nun 120 Minuten gerührt. Das so erhaltene Produkt wird entgast und in eine Aluminiumkartusche abgefüllt. Der NCO-Gehalt des so hergestellten Schmelzklebstoffes beträgt weniger als 0,1 %.

Beispiele 5 bis 17 - Schmelzklebstoffe 2 bis 14

Es wird gemäß Beispiel 4 verfahren, wobei die in der folgenden Tabelle aufgeführten Polyestermischungen mit der äquimolaren Menge der entsprechenden Addukte 1, 2 oder 3 (NCO : OH = 1 : 1) umgesetzt werden.

Tabelle

Eigenschaften der Schmelzklebstoffe 1 bis 14

| Klebstoff | Polyestermischung | Addukt | FP [°C] | TG [°C] |
|---|---|---|---|---|
| Nr. 1 | A/F = 70/30 | 1 | 66 | +8 |
| Nr. 2 | B/F = 90/10 | 1 | 122 | +22 |
| Nr. 3 | B/F = 70/30 | 1 | 83 | +4 |
| Nr. 4 | B/F = 50/50 | 1 | 60 | -19 |
| Nr. 5 | B/E = 50/50 | 1 | 71 | - 1 |
| Nr. 6 | B/D = 50/50 | 1 | 78 | +10 |
| Nr. 7 | C/D = 50/50 | 1 | 78 | +8 |
| Nr. 8 | C/D = 30/70 | 1 | 63 | -1 |
| Nr. 9 | B/F/G = 40/40/20 | 1 | 72 | +2 |
| Nr. 10 | B/F/H = 40/40/20 | 1 | 68 | -14 |
| Nr. 11 | B/F/H = 50/30/20 | 1 | 108 | - 4 |
| Nr. 12 | B/F/H = 30/30/40 | 1 | 126 | -12 |
| Nr. 13 | B/F = 70/30 | 2 | 73 | +4 |
| Nr. 14 | B/F = 70/30 | 3 | 79 | +7 |

TG = Glasumwandlungstemperatur

FP = Fließpunkt

Beispiel 18 - Schmelzklebstoff 15

Gemäß dem Verfahren in Beispiel 4 werden 420 g Polyester B, 180 g Polyester F und 256 g eines Cumaron-Inden-Harzes (Erweichungspunkt = 85 °C) mit 144 g des Adduktes 1 umgesetzt. Fließpunkt: 83 °C.

Beispiele 19 bis 28 -
Feuchtigkeitshärtung der Schmelzklebstoffe

Die beschriebenen Schmelzklebstoffe wurden in einer 500 µm dicken Schicht bei 100 bis 150 °C auf Siliconpapier aufgerakelt und bei 23 °C und 50 % rel. Luftfeuchtigkeit gelagert. Es wurde die Zeit gemessen, die notwendig war, bis diese Filme bei Temperaturen bis 200 °C nicht mehr aufschmelzbar waren.

| Klebstoff | zur Aushärtung notwendige Zeit |
|---|---|
| Nr. 1 | $<$ 120 Stunden |
| Nr. 3 | $<$ 60 Stunden |
| Nr. 4 | $<$ 48 Stunden |
| Nr. 5 | $<$ 24 Stunden |
| Nr. 7 | $<$ 48 Stunden |
| Nr. 9 | $<$ 48 Stunden |
| Nr. 11 | $<$ 24 Stunden |
| Nr. 13 | $<$ 48 Stunden |
| Nr. 14 | $<$ 24 Stunden |
| Nr. 15 | $<$ 48 Stunden |

Beispiel 29 - Verklebung von PVC

Der in Beispiel 4 beschriebene Klebstoff wird auf 100 °C erwärmt und in einer Schichtdicke von 1 mm auf einen 25 mm breiten und 1 mm starken PVC-Streifen aufgetragen. Ein zweiter PVC-Streifen wird nun so auf den ersten gelegt, daß sich eine Verklebungsfläche von 25 x 10 mm ergibt. Mit einer Abzugsgeschwindigkeit von 300 mm/min wird nach verschiedenen Lagerzeiten (23 °C, 50 % rel. Feuchtigkeit) die Scherkraft der Verklebung getestet. Es ergaben sich folgende Werte:

| | |
|---|---|
| Festigkeit nach dem Erkalten: | 200 $N/cm^2$ |
| Festigkeit nach 7 Tagen Lagerung: | 260 $N/cm^2$ |
| Festigkeit nach 14 Tagen Lagerung: | $>$ 320 $N/cm^2$ (Riß des PVC-Streifens). |

Beispiel 30 - Verklebung von Stahlblech

Entsprechend Beispiel 29 werden mit dem in Beispiel 18 beschriebenen Klebstoff zwei Stahlbleche miteinander verklebt. Die Festigkeiten bei Scherbeanspruchung:

| | |
|---|---|
| Festigkeit nach dem Erkalten: | 60 $N/cm^2$ |
| Festigkeit nach 1 Tag Lagerung: | 250 $N/cm^2$ |
| Festigkeit nach 7 Tagen Lagerung: | 500 $N/cm^2$. |

Der Bruch erfolgt in der Klebschicht.

Bearbeitungsexemplar

0202491



Troisdorf, den 21.05.1985
OZ 85032 Dr.Sk/br.

Patentansprüche

1. Feuchtigkeitshärtendes Polyestergemisch aus

a) 10 bis 90 Gew.-% eines bei Raumtemperatur festen, amorphen Hydroxylpolyesters mit einer Glasumwandlungstemperatur $\geq 10\ ^{\circ}C$ und einer Hydroxylzahl zwischen 20 und 60 mg KOH/g

und

b) 90 bis 10 Gew.-% eines bei Raumtemperatur flüssigen Hydroxylpolyesters mit einer Glasumwandlungstemperatur $\leq -10\ ^{\circ}C$ und einer Hydroxylzahl zwischen 10 und 80 mg KOH/g,

dadurch gekennzeichnet, daß die Hydroxylgruppen der unter a) und b) genannten Polyester zu 95 bis 100 Mol% durch Urethansilylharnstoffgruppen der Formel

$$-O-\underset{\underset{O}{\|}}{C}-NH-R^1-NH-\underset{\underset{O}{\|}}{C}-\underset{\underset{R^4}{|}}{N}-(CH_2)_n-\underset{\underset{R^3_p}{|}}{Si}(OR^2)_{3-p}$$

oder

$$-O-\underset{\underset{O}{\|}}{C}-NH-R^1-NH-\underset{\underset{O}{\|}}{C}-S-(CH_2)_n-\underset{\underset{R^3_p}{|}}{Si}(OR^2)_{3-p}$$

ersetzt sind, wobei

$R^1$ für den Rest eines monomeren oder polymeren Diisocyanats,

$R^2$ für einen Alkyl- oder Alkoxyalkylrest mit 1 bis 4 C-Atomen,

$R^3$ für einen Alkylrest mit 1 bis 4 C-Atomen,

$R^4$ für H oder $C_{1-4}$-Alkyl, Phenyl oder den Rest

$$\left[ (CH_2)_n - \underset{R^3_p}{\overset{|}{Si}}(OR^2)_{3-p} \right],$$

n für eine ganze Zahl von 1 bis 4 und

p für 0 oder 1 oder 2 stehen.

2. Feuchtigkeitshärtender Schmelzklebstoff, enthaltend ein Gemisch gemäß Anspruch 1, dadurch gekennzeichnet, daß er zusätzlich noch bis zu 40 Gew.-% eines hochmolekularen amorphen oder teilkristallinen Polyesters mit einer Glasumwandlungstemperatur $\leq$ + 10 °C und einer Hydroxylzahl unter 20 mg KOH/g enthält, dessen Hydroxylgruppen ggf. durch die im Anspruch 1 genannten Urethansilylharnstoffgruppen ersetzt sind.

3. Polyestergemisch gemäß Anspruch 1 für die Verwendung als Schmelzkleber, dadurch gekennzeichnet, daß es zusätzlich noch an sich bekannte Stoffe aus der Gruppe der klebrigmachenden Harze, Pigmente, Alterungsschutzmittel oder Füllstoffe enthält.